(19) Europäisches Patentamt
European Patent Office
Office européen des brevets

(11) **EP 4 166 824 B1**

(12) **EUROPEAN PATENT SPECIFICATION**

(45) Date of publication and mention
of the grant of the patent:
**12.11.2025 Bulletin 2025/46**

(21) Application number: **22202228.7**

(22) Date of filing: **18.10.2022**

(51) International Patent Classification (IPC):
*F16K 1/22* (2006.01)    *F16K 37/00* (2006.01)
*F16K 5/06* (2006.01)

(52) Cooperative Patent Classification (CPC):
**F16K 1/22; F16K 5/0605; F16K 37/005;
F16K 37/0091**

(54) **AN IMPROVED VALVE ASSEMBLY**

EINE VERBESSERTE VENTILANORDNUNG

UN ENSEMBLE DE SOUPAPE AMÉLIORÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **18.10.2021 IT 202100026630**

(43) Date of publication of application:
**19.04.2023 Bulletin 2023/16**

(73) Proprietor: **Pietro Fiorentini S.p.A.
36057 Arcugnano (VI) (IT)**

(72) Inventors:
• ZAMPIERI, Nevio
**36047 MONTEGALDA (VICENZA) (IT)**
• CAODURO, Nicola
**36057 ARCUGNANO (VICENZA) (IT)**

(74) Representative: **Braidotti, Andrea
Praxi Intellectual Property S.p.A.
Via F. Baracca, 5/A
30173 Venezia (IT)**

(56) References cited:
WO-A1-2014/189395    US-A1- 2019 219 430
US-A1- 2020 116 170    US-A1- 2021 088 370

## Description

FIELD OF THE TECHNIQUE

The present invention relates to an improved valve assembly. Preferably, but not limitingly, the valve assembly according to the invention can be installed in a distribution apparatus for a fluid, in particular for a gas or liquid (for example water). More preferably, the valve assembly according to the invention can be installed in an apparatus for the distribution of a fluid to end users, for example for the distribution of gas present and circulating inside a pipe, such as for example a pipe of the distribution network of natural gas or other gases produced in a decentralized way, such as biomethane or hydrogen.

Therefore, the invention finds advantageous use in the technical sector of the production and marketing of apparati and devices for the distribution of fluids, in particular gases or liquids (for example water), and is advantageously usable in networks for the transport and distribution of gas (in particular natural gas, or hydrogen and/or hydrogen/natural gas mixtures, or other gases produced in a decentralized way, such as biomethane) or liquids (in particular water).

STATE OF THE ART

Historically, flow meters were not installed in gas distribution networks as these networks, not having data connections, would have required an operator to physically go to the site to acquire the measurement and this being an expensive, uncomfortable operation which needed to be repeated frequently.

Currently, however, in gas distribution networks, but this also applies to water or other liquids, there is a need to know - for example in correspondence with the final reduction units (also called "GRF") that reduce the gas pressure towards end users - the flow rate of the gas that passes through the groups of the network and this in order to then be able to optimally distribute the gas between the various groups of the network itself. In particular, there is a need to digitize the monitoring of the gas flow rate that passes through the various groups of a distribution network, to allow the network manager to remotely monitor and balance (even not in real-time) the flow of gas between the various groups of the network itself.

In this context, where the geometry of the existing distribution network does not allow, in particular due to space problems, the installation of a flow meter it becomes - inevitably and unwanted - necessary to completely upset the geometry of the network itself, while where there is not even the possibility of changing it (think for example of an underground distribution network that develops in the vicinity of concrete constructions that constrain its geometry) one must inevitably renounce the installation of the flow meter.

Furthermore, it should be considered that the insertion of a dedicated flow meter in the distribution networks, in particular in those of new construction, involves an undesirable increase in both construction and installation costs.

Furthermore, the known flowmeters, which are generally installed in transport networks, have a cost and provide a fiscal measure with a level of accuracy that are also too high, in particular for the need for flow measurement required in transport networks distribution. Not only that, known flow meters generally require long straight sections of upstream and downstream piping in order to be installed, which sections are not always available in distribution networks.

WO2014/189395 describes a flow measurement system in which an additional and dedicated component is introduced inside the rotating ball shutter of a ball valve, ie a calibrated measurement disc according to the ISO5167 standard. This calibrated disc creates, as the flow rate varies, a corresponding pressure drop between upstream and downstream; for each measuring disc there is therefore a known correlation between flow rate and pressure drop and, therefore, by measuring the latter it is possible to trace the flow rate. The solution of WO2014/189395 is not particularly satisfactory as it is applicable only to valves of the ball type, and not to valves of other types, for example in butterfly valves; moreover, the measuring disk inevitably creates a reduction and/or obstruction of the gas passage section through the valve, effectively limiting the maximum capacity of the nominal diameter of the valve, and therefore also of the pipe in which the valve is installed.

OBJECTS OF THE INVENTION

The object of the invention is to propose a valve assembly which allows to overcome, at least in part, the aforementioned drawbacks present in traditional solutions.

Another object of the invention is to propose a valve assembly that allows the interception and/or regulation of the fluid that passes through it and, at the same time, allows a measurement of the speed and/or flow rate of the fluid that passes through it.

Another object of the invention is to propose a valve assembly that can be installed in an already existing network, and this without requiring additional spaces or varying the geometry of the network itself.

Another object of the invention is to propose a valve unit that can be installed in any section of a fluid distribution network, in particular in correspondence with a final reduction unit.

Another object of the invention is to propose a valve assembly which avoids the need to modify the geometry of the network in which it is installed.

Another object of the invention is to propose a valve unit which can also act as a measuring instrument in a transport network.

Another object of the invention is to propose a valve assembly which satisfies all the regulatory requirements on the subject.

Another object of the invention is to propose a valve assembly which is structurally and functionally completely reliable.

Another object of the invention is to propose a valve assembly which is an improvement and/or alternative to the traditional ones.

Another object of the invention is to propose a valve assembly which has high standards of safety and operability.

Another object of the invention is to propose a valve assembly which can be manufactured simply, quickly and at relatively low costs.

Another object of the invention is to propose a valve assembly which has an alternative characterization, both in constructive and functional terms, with respect to traditional ones.

Another object of the invention is to propose a method for measuring the flow rate and/or the velocity of a fluid, such as gas or liquid (for example water), which flows in an apparatus, preferably in a distribution apparatus for said fluid.

SUMMARY OF THE INVENTION

All the purposes mentioned herein, considered both individually and in any combination thereof, and others which will result from the following description are achieved, according to the invention, with a valve assembly as defined in claim 1.

DESCRIPTION OF THE

FIGURES The present invention is further clarified hereinafter in some of its preferred embodiments reported for purely illustrative and non-limiting purposes with reference to the attached drawings, in which:

Figure 1    shows a perspective view of a fluid distribution apparatus in which at least one valve group object of the present invention is installed,

Figure 2A   shows a perspective view of a first embodiment of the valve group according to the invention, installed in a pipe and in a condition of opening of the shutter;

Figure 2B   shows a perspective view of an enlarged detail of the valve assembly of Figure 2A, concerning the fluid flow pressure taps;

Figure 2C   shows a perspective view of the valve assembly of figure 2A;

Figure 3A   shows a perspective view of a second embodiment of the valve assembly according to the invention, installed in a pipe and in a condition of opening of the shutter;

Figure 3B   shows a perspective view of an enlarged detail of the valve assembly of Figure 3A, concerning the fluid flow pressure taps;

Figure 3C   shows a perspective view of the valve assembly of figure 3A;

Figure 4    shows a front view of the valve assembly according to the invention in its closed condition;

Figure 5    shows a front view of the valve assembly according to the invention in an open condition;

Figure 6    shows a cross-sectional front view of the valve assembly according to the invention with some components shown schematically.

DETAILED DESCRIPTION OF THE INVENTION AND OF SOME OF ITS PREFERRED EMBODIMENTS

The present invention relates to a valve assembly which has been identified as a whole with the reference number 1 in the attached figures.

Advantageously, the valve assembly 1 according to the invention is suitable for being used and installed in gas transport and distribution networks, in particular in the distribution networks of natural gas or other gases produced in a decentralized way (such as biomethane or hydrogen). The valve unit in question can be advantageously used in distribution networks and/or in transport networks, as well as in fluid distribution equipment such as in particular Final Reduction Groups (GRF).

The valve assembly according to the invention can be advantageously used to intercept and/or vary the flow of any fluid, be it a liquid, such as water, or a gas, such as natural gas or other gases produced in a decentralized way (such as biomethane or hydrogen), or even a multiphase fluid.

Preferably, as mentioned above, the valve unit 1 according to the invention is particularly but not limitedly suitable for use and installed in a distribution apparatus 100, in particular in correspondence with the final reduction units (GRF) provided in the distribution network of the gas.

Conveniently, the valve assembly 1 has two ports/ways, that is, with an inlet port 3 and an outlet port 4.

Conveniently, the valve assembly 1 according to the invention intercepts and/or regulates/partializes the flow of fluid that passes through the valve itself.

In particular, the valve unit 1 comprises a valve body 2 in which a fixed opening 20 is defined and in which a shutter 5 (ie mobile member of the valve unit 1) is housed which acts in correspondence with said fixed opening 20. In particular , the shutter 5 is moved with respect to said fixed opening 20 so as to block the flow of fluid or so as to define at least one passage 2' to allow and/or regulate/partialize the flow of fluid that passes through the valve assembly 1.

Conveniently, in a possible and preferred embodiment, the valve assembly 1 may comprise an interception valve in which the shutter 5 is movable with respect to the fixed opening between one (single/single) opening condition - preferably of maximum/complete opening - and a closing one to allow respectively and exclusively the passage or the stop of the fluid. Conveniently, therefore, the valve assembly 1 can comprise a two-position valve (on/off) and, preferably, can be a safety valve.

Conveniently, in a possible and preferred embodiment, the valve assembly 1 may comprise a regulating valve in which the shutter 5 is movable with respect to the fixed opening 20 between a closed condition and a plurality of different opening conditions, in particularly comprising a condition of maximum opening at at least one intermediate opening condition, to thus define different areas for the passage sections 2' and vary in a controlled manner the flow of the fluid that passes through the valve itself.

Conveniently, the valve assembly 1 can be associated with a fluid inlet, for example defined by an upstream pipe section T1, and with a fluid outlet, for example defined by a pipe section T2 downstream of said valve group. Conveniently, the inlet port 3 of the valve assembly 1 is intended to be fluidly connected with the upstream portion of pipe T1, while the outlet port 4 of the valve assembly 1 is intended to be fluidically connected with the downstream portion of pipe T2.

Preferably, mechanical connection means can be provided on the valve body 2 with the upstream pipe section T1 and with the downstream pipe section T2, for example with flanged portions 29 of the latter.

Conveniently, the connection of the valve body 2 of the valve assembly 1 with the upstream portions T1 and downstream T2 is watertight, to prevent the fluid from escaping to the outside.

Preferably, the valve body 2 has an annular shape - made in one or more pieces - and internally delimits the passage 2'. Preferably, the valve body 2 is made of metal. Preferably, the valve body 2 can comprise internally and in correspondence with the fixed opening 20 a valve seat, preferably comprising a gasket or the like, which acts as a seat for the shutter 5 and ensures the seal of the fluid when it is in contact with the valve shutter 5.

Conveniently, the fixed opening 20 of the valve body 2, in correspondence with which the shutter 5 acts, is orthogonal with respect to an axis X also corresponding to the direction of the flow of fluid that passes through said fixed opening. Conveniently, the X axis has a direction corresponding to and in agreement with the direction with which the fluid passes through the valve assembly 1 and, in particular, the fixed opening 20. Preferably, the X axis can correspond to or be parallel to the longitudinal development axis portions of pipe immediately upstream T1 and immediately downstream T2 intended to be connected respectively at the inlet and outlet to said valve assembly 1.

Preferably, the fixed opening 20 has a substantially circular section. Preferably, the fixed opening 20 extends along the X axis between the inlet port 3 and the outlet port 4 and faces said doors. Preferably, the fixed opening 20, the inlet port 3 and the outlet port 4 are mutually aligned along the X axis.

Conveniently, the shutter 5 which is housed inside the valve body 2 is operatively associated by means of at least one transmission member, preferably defined by a stem 10, to an actuator (not shown) configured to cause the movement of said shutter 5 between at least one opening condition, in which it allows the fluid to flow through said at least one passage 2', and a closed condition in which it blocks/intercepts the flow of fluid through the valve assembly 1.

Conveniently, the stem 10 transmits motion from the actuator to the shutter. Conveniently, the transmitted motion can be rotary, thus causing the rotation of the shutter 5, or linear translation, thus causing the translation of the shutter 5.

Preferably, said shutter 5 comprises at least one body 8 which is movable in rotation, and in in particular, it is rotatable with respect to the fixed opening 20 of the valve body 2. In particular, said body 8 is rotatable, and in particular it is rotatable, around an axis of rotation Y which is orthogonal to the axis X.

In a possible and preferred embodiment, said body 8 has a substantially discoidal conformation and is equipped with a first face 8' and a second face 8" and is movable in rotation around a rotation axis Y which crosses diametrically said discoidal body and is orthogonal with respect to X. In this case, the valve assembly 1 conveniently comprises a butterfly-type shutter.

Preferably, the shutter 5 is integral with the stem 10 which is mounted on the valve body 2 so as to be moved with respect to the latter, preferably so as to be rotated with respect to the valve body 2 around the Y axis. Conveniently, the stem 10 crosses the shutter 5 diametrically and engages rotatably at its ends on the valve body 2 in correspondence with the fixed opening 20. Conveniently, the stem 10 is operatively associated with actuation means configured to cause its rotation, and therefore of the shutter 5 integral with it, around the Y axis corresponding to the longitudinal development axis of the stem itself.

It is understood that the body 8 of the shutter 5 can have other shapes according to the knowledge available to those skilled in the art, for example it can have a substantially spherical or mushroom or cone shape.

The valve assembly 1 also comprises at least a first pressure tap 9' defined and/or mounted on said shutter 5 and at least a second pressure tap 9" defined and/or mounted on said shutter 5.

Conveniently, said first pressure tap 9' defines a total pressure tap, while said second pressure tap 9" defines a static pressure tap. Preferably, said first pressure tap 9' and said second pressure tap 9" - both mounted and/or defined on the shutter 5 - respectively define the total pressure tap and the static pressure tap of a Pitot tube.

Conveniently, the first pressure tap 9' is mounted and/or defined on the shutter 5 in an area of the latter which, when the shutter itself is open, results in a stagnation zone. Conveniently, the second pressure tap 9" is mounted and/or defined on the shutter 5 in a different area from that of the first pressure tap 9' and in which the flow lines of the flow field of the fluid are not altered by the presence of said pressure taps.

The first pressure tap 9' and the second pressure tap 9" are configured so that the axis V1 that emerges orthogonally from the first pressure tap 9' has a different/non-coincident direction or a coincident/parallel direction and a different direction with respect to the V2 axis which protrudes orthogonally from the second pressure tap 9".

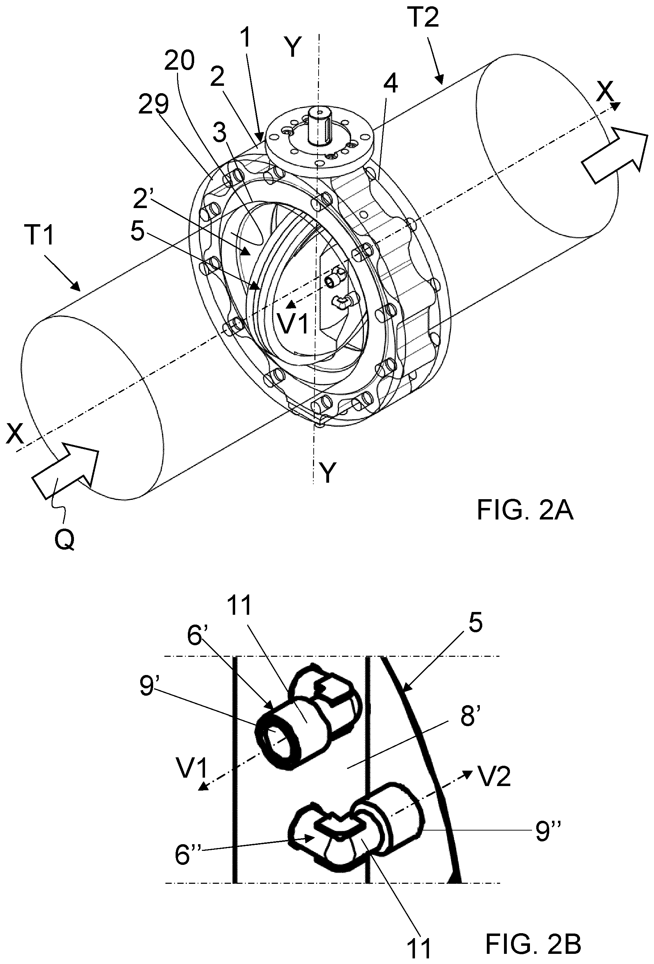

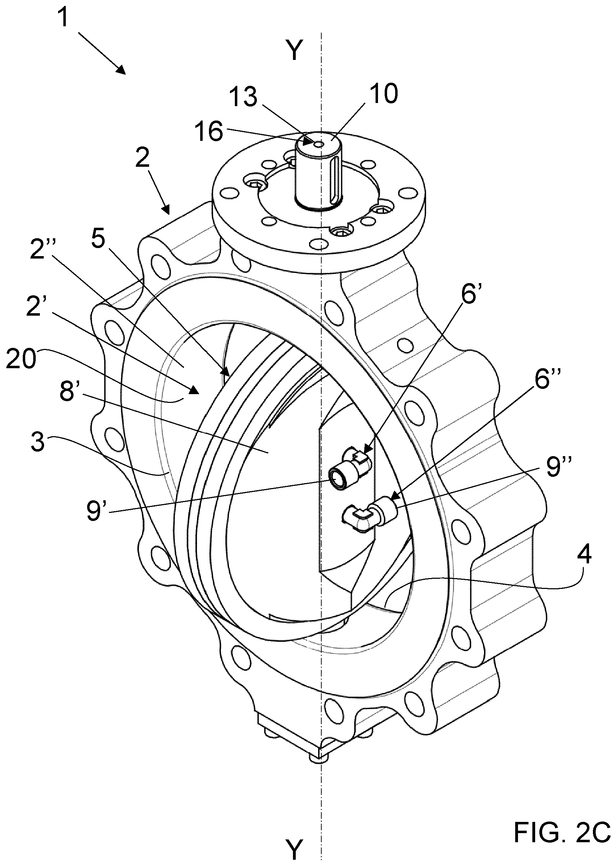

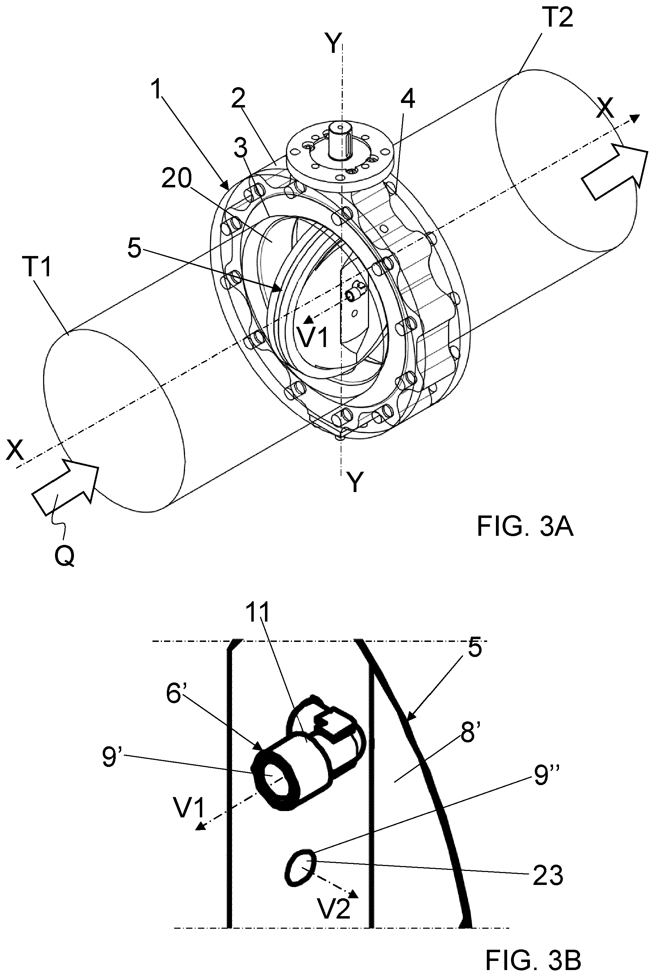

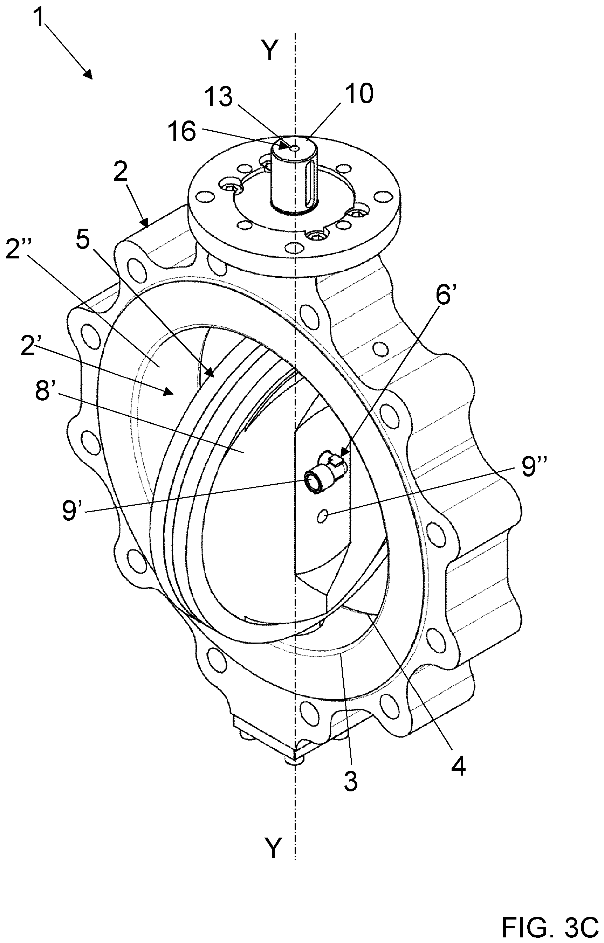

In particular, in a possible embodiment (see fig. 2B), the axes V1 and V2 are mutually parallel and have opposite directions. In particular, in another possible embodiment (see fig. 3B), the axes V1 and V2 are perpendicular to each other.

Preferably, said first pressure tap 9' is mounted and/or defined on said shutter 5 so that, in a condition of opening of said shutter, and preferably in its condition of maximum and/or single opening, it is open and facing towards the direction of flow of the fluid through the fixed opening 20, to thus substantially intercept the flow of said inlet fluid from the front.

Preferably, said first pressure tap 9' is mounted and/or defined on said shutter 5 so that, in a condition of opening of said shutter, the axis V1 which protrudes orthogonally from said first pressure tap 9' is substantially parallel , but with the opposite direction, with respect to the X axis which crosses orthogonally the fixed opening 20 with a direction corresponding to that of the advancement of the fluid through the valve assembly 1.

As mentioned, the second pressure tap 9" is defined and/or mounted on said shutter 5 so that, in the same opening condition as said shutter, the axis V2 which protrudes orthogonally from the second pressure tap 9" defines with the axis V1 which protrudes orthogonally from the first pressure tap 9' an angle of approximately 90°-180°. Conveniently, in a possible embodiment (see fig. 2A-2C), the axis V2 which protrudes orthogonally from the second pressure tap 9" is arranged so as to define an angle of 180° with respect to the axis V1 which it emerges orthogonally from the first pressure tap 9'. Conveniently, in another possible embodiment (see fig. 3A-3C), the axis V2 which protrudes orthogonally from the second pressure tap 9" is arranged so as to define an angle of 90° with respect to the axis V1 which protrudes orthogonally from the first pressure tap 9'.

Preferably, the pressure taps 9', 9" are mounted and/or defined on the same face 8' of the shutter 5, however they could suitably be mounted and/or defined on different or opposite faces of the shutter 5.

Preferably, the pressure taps 9' and 9" are superimposed on each other along the direction/axis Y.

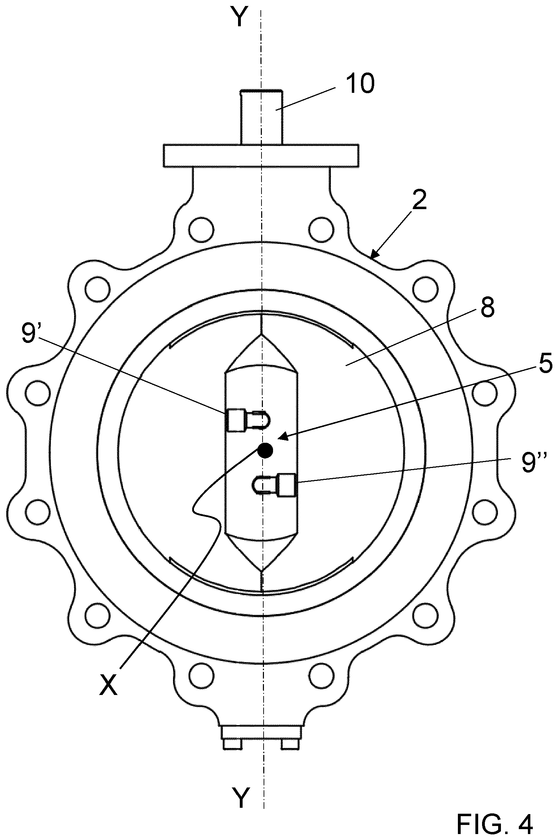

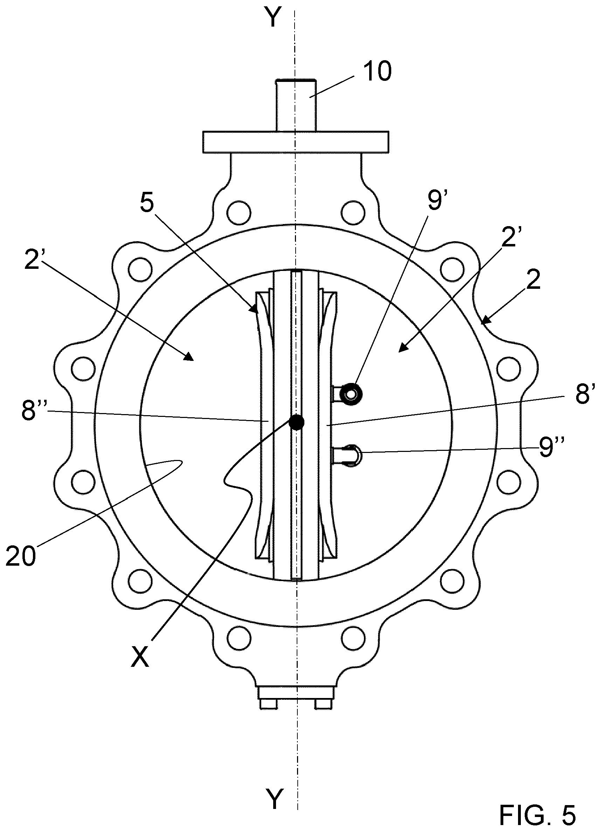

Advantageously, the shutter 5 is movable around the axis of rotation Y between said closing condition (see fig. 4), in which said first face 8' and said second face 8" are substantially transverse to the X axis and said opening condition (see fig. 5) in which said first face 8' and said second face 8" are substantially parallel to the X axis.

Advantageously, in a possible embodiment, the first pressure tap 9' and/or the second pressure tap 9" are formed in corresponding mouth elements, 6' or 6" respectively, which are mechanically associated to said shutter 5, they are preferably mounted on this u last.

Preferably, each mouth element 6' or 6" comprises a tubular section 11 shaped like an "L" which is open at one end so as to define said first pressure tap 9' or said second pressure tap 9", while at the other end it is mechanically associated with said shutter 5. Preferably, in more detail, said tubular section 11 comprises a first part which extends from the first face 8' (ie perpendicular to the axes V1 or V2) and a second part which extends parallel to said first face 8' (ie parallel to the V1 or V2 axes) and ends with the respective pressure tap 9' or 9".

More in detail, in a preferred embodiment (see fig. 2A - 2C), a first mouth element 6' is provided which, in correspondence with its free end, defines the first pressure tap 9' and a second mouth element 6" which, at its free end, defines the second pressure tap 9".

Advantageously, in a possible embodiment, the first pressure tap 9' and/or the second pressure tap 9" are defined by corresponding holes 23 made on said shutter 5. Preferably, in the case of a disc-shaped shutter 5, said holes are formed on one face of said disk.

More in detail, in a preferred embodiment (see fig. 3A - 3C), a first mouth element 6' is provided which, at its free end, defines the first pressure tap 9', while the second pressure tap 9" is defined by a hole 23 which is obtained directly on the body of said shutter 5.

Furthermore, according to the invention, the valve assembly 1 comprises measuring means 17 operatively connected to said first pressure tap 9' and to said second pressure tap 9" and configured to detect and/or determine at least one quantity to be used for calculating the speed and/or flow rate Q of the fluid through the valve assembly 1.

Conveniently, said measuring means 17 are configured to detect and/or determine at least one of the following quantities:

- the total pressure "$P_T$" of said fluid, and corresponding to the pressure of the fluid withdrawn at said first pressure tap 9', and the static pressure "$P_S$" of said fluid, and corresponding to the pressure of the fluid withdrawn at of said second pressure tap 9", and/or
- the dynamic pressure "dP" of the fluid as the differential pressure between the total pressure "$P_T$" of said fluid, and corresponding to the pressure of the fluid withdrawn at said first pressure tap 9', and the static pressure "$P_S$" of said fluid, and corresponding to the pressure of the fluid withdrawn at said second pressure tap 9", and/or

- a flow rate "q" of the fluid deriving from said pressure difference between said total pressure and said static pressure and, in particular, corresponding to the flow rate of the fluid flowing in a by-pass circuit which receives the flow of the fluid withdrawn at said first pressure tap 9' and re-introduced at said second pressure tap 9", to thus provide a signal representative of the flow rate "q" of the flow deriving from the difference in pressure between the first and second pressure taps.

Conveniently, the valve assembly 1 comprises fluidic connection means 16 between said first pressure tap 9', said second pressure tap 9" and said measuring means 17.

Advantageously, said connection means 16 comprising at least one fluidic circuit 13 which it is obtained inside said shutter 5 and/or inside the valve body 2 and/or inside the member - preferably defined by the stem 10 - which transmits motion to the shutter 5. Preferably, the fluid circuit 13 comprises one or more ducts 13' obtained inside the shutter 5 and/or inside the stem 10 and/or inside the valve body 2.

Advantageously, the fluidic circuit 13 connects each pressure tap 9' or 9" with a corresponding pressure transducer and/or with a differential pressure transducer.

Advantageously, the stem 10 extending along said axis of rotation Y, mechanically connected to said shutter 5 and movable in rotation around said axis of rotation Y, is internally equipped with at least one duct 13' and 13" which communicates fluid said first and second pressure tap 9', 9" with said measuring means 17.

Preferably, the stem 10 is equipped with two distinct ducts 13' and 13" placed in fluid communication respectively with the first pressure tap 9' and the second pressure tap 9". Preferably, said two ducts 13' and 13" are in fluid communication respectively with the mouths 6' and 6", if provided, or with the holes 23.

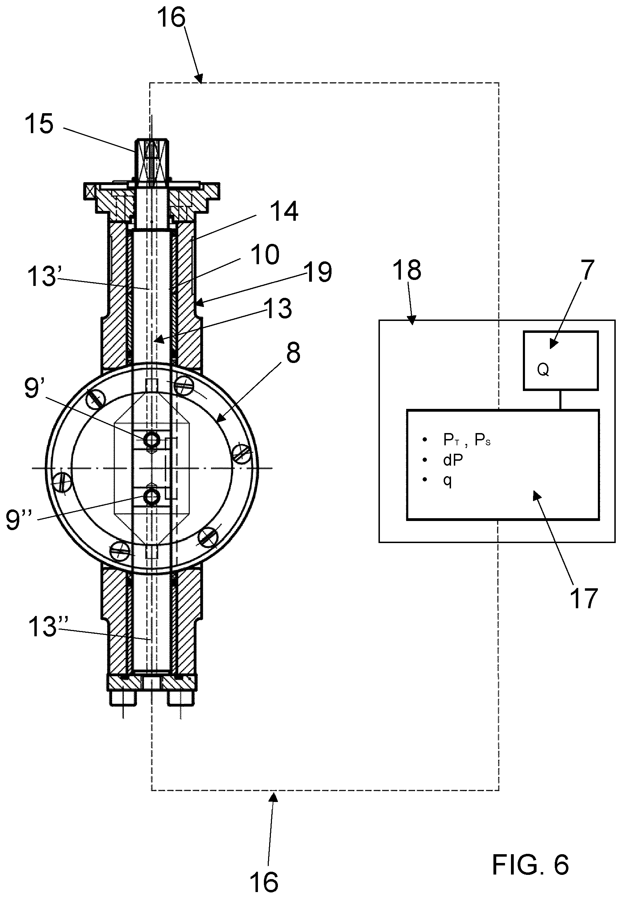

With particular reference to the attached figure 6, the valve assembly 1 also comprises a fixed structure 19 which is associated with the valve body 2. The fixed structure 19 comprises a jacket 14 inside which the stem 10 is rotatably housed which is integral in rotation with the shutter 5.

In this way, the valve assembly 1 object of the present In addition to the function of interception and/or regulation of the fluid flow, this invention also allows to implement the detection and measurement of the speed and/or flow rate Q (as described in detail below), of the fluid that passes through the valve group and this is substantially obtained within the overall dimensions of the valve group itself, thus obviating the need to install an additional sensor (such as a dedicated flow meter) outside the valve group 1.

Therefore, the valve unit 1 can be used in existing and operational distribution apparatuses to replace valve assemblies already present therein, without the need to vary the geometry of said apparatuses and without further encumbrance, thus allowing to have - in added to the function of interception and/or regulation of the fluid flow - also a detection of the speed and/or flow rate Q of the fluid itself.

Conveniently, the measuring means 17 comprise at least one pressure transducer which is operatively connected - and in particular is fluidically connected - to said first pressure tap 9' and to said second pressure tap 9".

Preferably, a first pressure transducer can be provided which is operatively connected to the first pressure tap 9' to thus provide a signal representative of the total pressure of the fluid.

Preferably, a second pressure transducer can be provided which is operatively connected to the second pressure tap 9" to thus provide a signal representative of the static pressure of the fluid.

Preferably, a differential pressure transducer can be provided which is operatively connected to the first 9' and to the second pressure tap 9" to thus provide a signal representative of the dynamic pressure, i.e. of the fluid pressure difference between the first and the second pressure tap.

Preferably, said at least one pressure transducer is configured to generate at its output a corresponding electrical signal representative of the pressure of the fluid drawn in correspondence with the first pressure tap 9' and the second pressure tap 9", and/or their difference.

Preferably, said at least one pressure transducer comprises a flow meter - for example a flow meter - which is operationally mounted on a by-pass circuit which receives the flow taken from said first pressure tap 9' and re-introduced into said second pressure tap 9", to thus provide a signal representative of the flow rate "q" of the flow deriving from the pressure difference between the first and second pressure taps.

Preferably, said at least one transducer of the measuring means 17 is mounted externally with respect to the valve body 2, but it could also be mounted on the latter.

The valve unit 1 also comprises an electronic processing unit 7 which is electronically - via cable or via wireless - connected to the measuring means 17 and which is configured to determine the speed and/or flow rate Q of said fluid passing through the unit valve on the basis of the quantities detected and/or determined by said measuring means 17. In particular, the processing unit 7 is electronically connected to said at least one transducer and is configured to receive from them an electrical signal representative of said corresponding values of pressure $P_T$, $P_s$, dP and/or flow rate q. Preferably, the processing unit 7 is configured to determine the speed and/or flow rate Q of said fluid on the basis of the pressure values at the first pressure tap 9' and the second pressure tap 9", and/or directly on the basis of their difference, and/or on the basis of the flow rate q of said fluid - preferably circulating in a by-pass circuit - deriving from the pressure difference at the first pressure tap 9' and the second pressure tap 9".

In this way, the valve assembly 1 is also suitable for determining the speed and/or flow rate Q of the fluid that passes through the valve, quickly, easily and without requiring further dimensions.

Preferably, the measuring means 17 and the electronic processing unit 7 are mounted on the same electronic board 18. Conveniently, in a possible embodiment, the measuring means 17 can be mounted on the valve body 2 and be connected via cable or via wireless with the electronic processing unit 7.

Conveniently, the electronic processing unit 7 can be mounted on or near the valve body 2, or it can also be provided in a remote location with respect to the valve body 2.

Conveniently, the processing electronics unit 7 comprises a microprocessor or a microcontroller or a computer/processor. Advantageously, the electronic processing unit 7 can be mounted externally on the valve body 2 or it can be mounted externally and spaced apart from the valve body 2.

Conveniently, the same electronic unit which acts as an electronic processing unit 7 can also be configured for commanding the opening or closing movement of the shutter 5, or a separate and dedicated electronic unit could be provided for the command of the shutter.

Advantageously, the electronic processing unit 7 comprises at least one calculation module programmed to receive and process the electrical signals of the pressure transducers to thus calculate the aforementioned value of the speed and/or flow rate Q of said fluid passing through the valve unit 1.

Conveniently, the electronic processing unit 7 and in particular its calculation module is configured to calculate the value of the speed and/or flow rate Q of the fluid flowing through at least a passage 2' of the valve assembly 1 on the basis of the value of total pressure $P_T$, measured at the first pressure tap 9' and the static pressure value $P_S$, measured at the second pressure tap 9". Preferably, the electronic processing unit 7 and in particular its calculation module is configured to calculate the value of the speed and/or flow rate Q of the fluid flowing through the passage 2' of the valve assembly 1 on the basis of the difference dP of the value of total pressure, measured at the first pressure tap 9' and the static pressure value, measured at the second pressure tap 9".

In particular, the calculation module determines the speed of the fluid according to the formula:

$$v = \sqrt{\frac{2(P_T - P_S)}{\rho}}$$

In which $P_T$ is the total pressure detected on the basis of what is drawn through the first pressure tap 9', $P_S$ is the static pressure detected on the basis of what drawn through the second pressure tap 9", and $\rho$ is the density of the fluid flowing inside the valve body 1. From the value of the fluid velocity, the calculation module advantageously determines the flow rate value Q by multiplying this value of velocity for the area of said at least one passage 2' through which the fluid flows. Conveniently, this calculation of the speed and/or flow rate Q indirectly starting from the total and static pressure values of the fluid exploits the principle known per se with the term "Pitot tube".

Conveniently, the electronic processing unit 7 and in particular its calculation module is configured to calculate the value of the speed and/or flow rate Q of the fluid flowing through the passage 2' of the valve assembly 1 on the basis of the flow rate q of fluid deriving from the difference in pressure between the first and second pressure taps and which circulates in a by-pass circuit which receives the flow taken from said first pressure tap 9' and then reintroduced into said second pressure tap 9".

Advantageously, the electronic processing unit 7 further comprises at least one communication module, which receives the speed and/or flow rate values Q and sends it to an external device, even remote, preferably for monitoring and/or control purposes.

Preferably, the valve assembly 1 comprises a display module (not illustrated in the attached figures), for example a display, for displaying the measured and/or calculated measurements.

Preferably, the valve assembly 1 comprises a memorization module (not illustrated in the attached figures), for thus memorizing the measurements detected and/or calculated.

Advantageously, the valve assembly 1 comprises a transmission or transceiver module (not shown in the attached figures), preferably of the wireless type, for thus remotely transmitting the measured and/or calculated measurements.

Advantageously, the valve unit 1 comprises at least one source of electrical power supply for the components of the unit itself and/or may comprise means for electrical connection to an external source for the electrical power supply of said components.

Conveniently, no disc is provided and mounted inside the shutter 5 or on the latter (and in particular no calibrated measuring disc is provided) or any other component.

The present invention also relates to a fluid distribution apparatus 100 comprising at least one valve assembly 1 of the type described up to now in its essential and/or optional characteristics. All the above characteristics with reference to the valve assembly 1 must also be understood as referring to the distribution apparatus 100 comprising at least one valve assembly 1.

Conveniently, the apparatus 100 comprises at least one distribution line 101, which comprises a pipe in which the fluid flows, in particular combustible gas but it could also be a liquid, for example water.

The distribution line 101 extends between an inlet section 102 and an outlet section 103 in which at least one valve assembly 1 is preferably interposed. Preferably, the fluid entering the inlet section 102 is a high or medium pressure fluid and the fluid leaving the outlet section 103 is a low pressure fluid, or in any case a lower pressure than the inlet one. For this purpose, the apparatus 100 preferably comprises at least one pressure reducing device 106 placed to intercept the line 101, interposed between the inlet section 102 and the outlet section 103.

In accordance with the preferential embodiment illustrated in the attached figures, the distribution line 101 comprises two branches 105, 105' in parallel with each other in which the fluid flows. In this way, it is possible to operate on the distribution apparatus, for example in the case of maintenance, by blocking one branch at a time without interrupting the supply of fluid to the users downstream of the apparatus.

Preferably, the apparatus 100 comprises at least one said pressure reducing device 106 for each branch 105, 105' and advantageously at least two devices 106 for each branch 105, 105'.

Conveniently, the apparatus 100 also comprises at least one filter 107 placed to intercept the line 101 and preferably comprises two filters 107, each placed to intercept a corresponding branch 105, 105' preferably in proximity to the inlet section 102.

Preferably, the apparatus 100 comprises at least one valve assembly 1 of the type described above. Advantageously, the apparatus 100 can comprise at least one valve unit 1 placed to intercept each branch 105, 105'. Advantageously, the apparatus can comprise at least two valve assemblies 1, each placed to intercept the corresponding branch 105, 105' near the inlet and/or outlet of said branch.

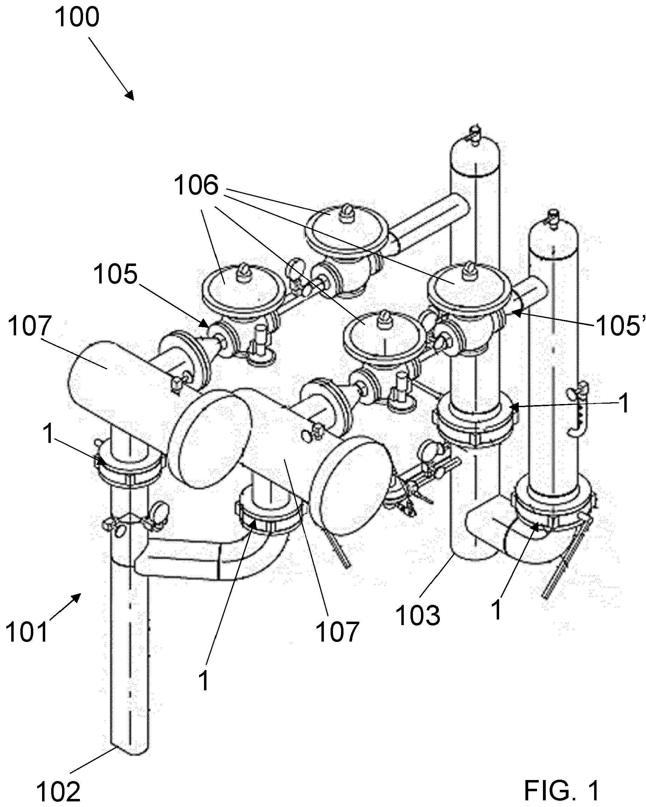

In accordance with the embodiment illustrated in the attached figure 1, the apparatus comprises four valve assemblies 1, in which two valve assemblies 1 are placed to intercept the first branch 105, and two valve assemblies 1 are arranged to intercept the second branch 105'. Advantageously, two valve groups are placed to intercept the corresponding branches 105, 105' near the inlet of said branches and two valve groups are placed to intercept the corresponding branches 105, 105' near the outlet of said branches.

Preferably, the valve unit 1 according to the invention can be used to replace the traditional butterfly valves provided in gas distribution networks, in particular in final reduction units.

The present invention also relates to a method for measuring the speed and/or flow rate Q of a fluid flowing in an apparatus, preferably in a distribution apparatus for said fluid, characterized in that a valve assembly 1 is used as described above.

From what has been said it is clear that the valve unit 1 according to the invention is particularly advantageous in that:

- it allows to measure the speed and/or flow rate Q of the fluid and at the same time allows to intercept and/or regulate the fluid flow;
- it can be installed in any section of a gas distribution network, in particular in correspondence with the final reduction units;
- has a small hindrance;
- obviates the need to modify the geometry of the distribution network for its installation.

In particular, unlike the solution of WO2014/189395 in which only the static pressures upstream and downstream of the calibrated measuring disc are measured, which can be inserted exclusively inside the ball shutter of a ball valve, in the solution according to the present invention, in addition to the second pressure tap which defines a static pressure tap, a first pressure tap is provided which instead defines a total pressure tap. Advantageously, moreover, in the solution according to the present invention, the pressure taps are mounted and/or defined directly on the shutter and, in particular, unlike the solution of WO2014/189395, the installation and use of a dedicated component, ie the calibrated measuring disc, which is mounted on the shutter and which, inevitably and undesirably, reduces and/or obstructs the fluid passage section through the valve, thus limiting the maximum capacity of the nominal diameter of the valve and of the installation piping, as well as limiting its application to ball valves only.

The present invention has been illustrated and described in some preferred embodiments, but it is understood that executive variations may be applied to them in practice, without however departing from the scope of protection defined by the appended claims of the present patent for industrial invention.

**Claims**

1. Valve assembly (1) for a fluid, comprising a valve body (2) in which a fixed opening (20) is defined and comprising a shutter (5) which is actuated so as to be movable with respect to said fixed opening (20) between at least one open condition, in which it defines at least one passage (2') for the flow of said fluid through the valve assembly (1), and a closed condition in which it blocks the flow of fluid through the valve assembly (1), wherein said valve assembly further comprises:

   - at least a first pressure tap (9') defined and/or mounted on said shutter (5),
   - at least one second pressure tap (9") defined and/or mounted on said shutter (5) and configured so as to define a static pressure tap,
   - measuring means (17) operatively connected to said first pressure tap (9') and to said second pressure tap (9") and configured to detect and/or determine at least one quantity to be used for calculating the speed and/or flow rate (Q) of the fluid through the valve assembly (1), the valve assembly being **characterized in that** the at least a first pressure tap is defined and/or mounted on said shutter so that, when said shutter is in said at least one open condition, it defines a total pressure tap.

2. Valve assembly according to claim 1, **characterized in that** said measuring means (17) are configured to detect and/or determine at least one of the following quantities:

  - the total pressure ($P_T$) of said fluid and the static pressure ($P_S$) of said fluid, and/or
  - the pressure difference (dP) between said total pressure and said static pressure, and/or
  - a flow rate (q) of said fluid deriving from said pressure difference between said total pressure and said static pressure.

3. Valve assembly (1) according to one or more of the preceding claims, **characterized in that** the first pressure tap (9') and the second pressure tap (9') are configured so that the axis V1 which protrudes orthogonally from the first pressure tap (9') has a different direction or a direction coinciding/parallel with a different direction with respect to the axis V2 which comes out orthogonally from the second pressure tap (9").

4. Valve assembly (1) according to one or more of the preceding claims, **characterized in that** said first pressure tap (9') is mounted and/or defined on said shutter (5) so that, in an opening condition of said shutter, the axis V1 which protrudes orthogonally from said first pressure tap (9') is substantially parallel, but with the opposite direction, with respect to the axis X which crosses orthogonally the fixed opening (20) with a direction corresponding to that fluid advance through the valve assembly (1).

5. Valve assembly (1) according to one or more of the preceding claims, **characterized in that** the second pressure tap (9") is defined and/or mounted on said shutter (5) so that, when said shutter (5) is found in said at least one opening configuration, the axis V2 which protrudes orthogonally from the second pressure tap (9") defines an angle of about 90° -180°.

6. Valve assembly (1) according to one or more of the preceding claims, **characterized in that** said measuring means (17) are electronically connected with a processing unit (7) which is configured to determine the speed and/or flow rate (Q) of said fluid that passes through the valve assembly (1) on the basis of the pressures detected and/or determined by said measuring means (17).

7. Valve assembly (1) according to one or more of the preceding claims, **characterized in that** said measuring means (17) comprise:

  - a first pressure transducer which is operatively connected to the first pressure tap (9') to thus provide a signal representative of the total pressure of the fluid, and
  - a second pressure transducer which is operatively connected to the second pressure tap (9') to thus provide a signal representative of the static pressure of the fluid, and/or
  - a differential pressure transducer which is operatively connected to the first (9') and to the second pressure tap (9') to thus provide a signal representative of the dynamic pressure, and therefore of the fluid pressure difference between the first and the second tap pressure, and/or
  - a flow meter which is operationally mounted on a by-pass circuit which receives the flow taken from said first pressure tap (9') and re-introduced into said second pressure tap (9"), to thus provide a representative signal of the speed and/or flow rate (q) of the flow deriving from the pressure difference between the first and second pressure taps.

8. Valve assembly (1) according to one or more of the preceding claims, **characterized in that** it comprises fluidic connection means (16) between said first pressure tap (9'), said second pressure tap (9") and said measuring means (17), said fluidic connection means (16) comprising at least one fluidic circuit formed inside said shutter (5) and/or inside the valve body (2) and/or inside the member (10) which transmits motion to said shutter (5).

9. Valve assembly (1) according to one or more of the preceding claims, **characterized in that** said shutter (5) is shaped like a disk or ball, preferably with said first pressure tap (9') and said second pressure tap (9") mounted and/or defined on the same face of said shutter (5).

10. Valve assembly (1) according to one or more of the preceding claims, **characterized in that** said first pressure tap (9') and/or said second pressure tap (9") is:

  - obtained on a corresponding opening element (6', 6"), preferably defined by an "L" shaped tubular section, which is mounted on said shutter (5), and/or
  - defined by a hole (23) defined on the surface of said shutter (5).

**11.** Valve assembly (1) according to one or more of the preceding claims, **characterized in that** no disk or further component is mounted inside the shutter (5) or on the shutter (5).

**12.** Valve assembly (1) according to one or more of the preceding claims, **characterized in that** said first (9') and said second pressure tap (9") are superimposed on each other along an axis Y around which the shutter (5) is movable.

**13.** Valve assembly (1) according to one or more of the preceding claims, **characterized in that** the shutter (5) is operatively associated by means of at least one transmission member, preferably defined by a stem (10) which crosses the shutter diametrically (5), to an actuator configured to cause the movement of said shutter (5) between said at least one opening condition and said closing condition.

**14.** A fluid dispensing apparatus comprising:

- at least one distribution line (101) extending between an inlet section (102) and an outlet section (103);

and **characterized in that** it comprises at least one valve assembly (1) according to one or more of the preceding claims placed to intercept said at least one distribution line (101).

**15.** Method for measuring the speed and/or flow rate (Q) of a fluid flowing in an apparatus, preferably in a distribution apparatus for said fluid, **characterized in that** a valve assembly (1) is used according to one or more of the claims 1 to 13.

**Patentansprüche**

**1.** Ventilanordnung (1) für ein Fluid, die einen Ventilkörper (2) umfasst, in dem eine feste Öffnung (20) definiert ist, und die einen Verschluss (5) umfasst, der so betätigt wird, dass er in Bezug auf die feste Öffnung (20) zwischen mindestens einem offenen Zustand, in dem er mindestens einen Durchgang (2') für den Durchfluss des Fluids durch die Ventilanordnung (1) definiert, und einem geschlossenen Zustand, in dem er den Durchfluss des Fluids durch die Ventilanordnung (1) blockiert, beweglich ist, wobei die Ventilanordnung ferner umfasst:

- mindestens einen ersten Druckabgriff (9'), der an dem Verschluss (5) definiert und/oder montiert ist,
- mindestens einen zweiten Druckabgriff (9"), der an dem Verschluss (5) definiert und/oder montiert ist und so konfiguriert ist, dass er einen statischen Druckabgriff definiert,
- Messmittel (17), die betriebswirksam mit dem ersten Druckabgriff (9') und dem zweiten Druckabgriff (9") verbunden und so konfiguriert sind, dass sie mindestens eine Größe erfassen und/oder bestimmen, die für die Berechnung der Geschwindigkeit und/oder der Durchflussrate (Q) des Fluids durch die Ventilanordnung (1) verwendet werden soll, wobei die Ventilanordnung **dadurch gekennzeichnet ist, dass** der mindestens eine erste Druckabgriff so definiert und/oder an dem Verschluss montiert ist, dass er einen Gesamtdruckabgriff definiert, wenn sich der Verschluss in dem mindestens einen offenen Zustand befindet.

**2.** Ventilanordnung nach Anspruch 1, **dadurch gekennzeichnet, dass** die Messmittel (17) so konfiguriert sind, dass sie mindestens eine der folgenden Größen erfassen und/oder bestimmen:

- den Gesamtdruck ($P_T$) des Fluids und den statischen Druck (Ps) des Fluids und/oder
- die Druckdifferenz (dP) zwischen dem Gesamtdruck und dem statischen Druck, und/oder
- eine Durchflussrate (q) des Fluids, die sich aus der Druckdifferenz zwischen dem Gesamtdruck und dem statischen Druck ergibt.

**3.** Ventilanordnung (1) nach einem oder mehreren der vorhergehenden Ansprüche, **dadurch gekennzeichnet, dass** der erste Druckabgriff (9') und der zweite Druckabgriff (9') so konfiguriert sind, dass die Achse V1, die orthogonal aus dem ersten Druckabgriff (9') herausragt, eine andere Richtung oder eine mit einer anderen Richtung zusammenfallende/parallele Richtung in Bezug auf die Achse V2, die orthogonal aus dem zweiten Druckabgriff (9") herauskommt, aufweist.

**4.** Ventilanordnung (1) nach einem oder mehreren der vorhergehenden Ansprüche, **dadurch gekennzeichnet, dass** der erste Druckabgriff (9') an dem Verschluss (5) so montiert und/oder definiert ist, dass in einem Öffnungszustand des Verschlusses die Achse V1, die orthogonal aus dem ersten Druckabgriff (9') herausragt, im Wesentlichen parallel, jedoch mit der entgegengesetzten Richtung, in Bezug auf die Achse X ist, die orthogonal die feste Öffnung (20) mit einer Richtung kreuzt, die dem Fluidvorschub durch die Ventilanordnung (1) entspricht.

**5.** Ventilanordnung (1) nach einem oder mehreren der vorhergehenden Ansprüche, **dadurch gekennzeichnet, dass** der zweite Druckabgriff (9") so definiert und/oder an dem Verschluss (5) montiert ist, dass, wenn sich der Verschluss (5) in der mindestens einen Öffnungskonfiguration befindet, die Achse V2, die orthogonal aus dem zweiten Druckabgriff (9") herausragt, einen Winkel von etwa 90°-180° definiert.

6. Ventilanordnung (1) nach einem oder mehreren der vorhergehenden Ansprüche, **dadurch gekennzeichnet, dass** die Messmittel (17) elektronisch mit einer Verarbeitungseinheit (7) verbunden sind, die dazu konfiguriert ist, die Geschwindigkeit und/oder Durchflussrate (Q) des Fluids, das durch die Ventilanordnung (1) strömt, auf der Grundlage der von den Messmitteln (17) erfassten und/oder bestimmten Drücke zu bestimmen.

7. Ventilanordnung (1) nach einem oder mehreren der vorhergehenden Ansprüche, **dadurch gekennzeichnet, dass** die Messmittel (17) umfassen:

    - einen ersten Druckwandler, der betriebswirksam mit dem ersten Druckabgriff (9') verbunden ist, um so ein für den Gesamtdruck des Fluids repräsentatives Signal zu liefern, und
    - einen zweiten Druckwandler, der betriebswirksam mit dem zweiten Druckabgriff (9') verbunden ist, um so ein für den statischen Druck des Fluids repräsentatives Signal zu liefern, und/oder
    - einen Differenzdruckwandler, der betriebswirksam mit dem ersten (9') und dem zweiten Druckabgriff (9') verbunden ist, um so ein Signal zu liefern, das für den dynamischen Druck und damit für die Fluiddruckdifferenz zwischen dem ersten und dem zweiten Druckabgriff repräsentativ ist, und/oder
    - einen Durchflussmesser, der betriebswirksam an einem Bypass-Kreislauf montiert ist, der den aus dem ersten Druckabgriff (9') entnommenen und in den zweiten Druckabgriff (9") wieder eingeleiteten Fluss empfängt, um so ein repräsentatives Signal für die Geschwindigkeit und/oder die Durchflussrate (q) des sich von der Druckdifferenz zwischen dem ersten und dem zweiten Druckabgriff ergebenden Flusses zu liefern.

8. Ventilanordnung (1) nach einem oder mehreren der vorhergehenden Ansprüche, **dadurch gekennzeichnet, dass** sie Fluidverbindungsmittel (16) zwischen dem ersten Druckabgriff (9'), dem zweiten Druckabgriff (9") und den Messmitteln (17) umfasst, wobei die Fluidverbindungsmittel (16) mindestens einen Fluidkreislauf umfassen, der innerhalb des Verschlusses (5) und/oder innerhalb des Ventilkörpers (2) und/oder innerhalb des Elements (10) ausgebildet ist, das die Bewegung auf den Verschluss (5) überträgt.

9. Ventilanordnung (1) nach einem oder mehreren der vorhergehenden Ansprüche, **dadurch gekennzeichnet, dass** der Verschluss (5) scheiben- oder kugelförmig ausgebildet ist, wobei vorzugsweise der erste Druckabgriff (9') und der zweite Druckabgriff (9") auf der gleichen Fläche des Verschlusses (5) montiert und/oder definiert sind.

10. Ventilanordnung (1) nach einem oder mehreren der vorhergehenden Ansprüche, **dadurch gekennzeichnet, dass** der erste Druckabgriff (9') und/oder der zweite Druckabgriff (9") ist:

    - an einem entsprechenden Öffnungselement (6', 6") erhalten, das vorzugsweise durch ein "L"-förmiges rohrförmiges Profil definiert ist, das an dem Verschluss (5) montiert ist, und/oder
    - durch ein Loch (23) definiert, das auf der Oberfläche des Verschlusses (5) definiert ist.

11. Ventilanordnung (1) nach einem oder mehreren der vorhergehenden Ansprüche, **dadurch gekennzeichnet, dass** im Inneren des Verschlusses (5) oder an dem Verschluss (5) keine Scheibe oder kein weiteres Bauteil montiert ist.

12. Ventilanordnung (1) nach einem oder mehreren der vorhergehenden Ansprüche, **dadurch gekennzeichnet, dass** der erste (9') und der zweite Druckabgriff (9") entlang einer Achse Y, um die der Verschluss (5) beweglich ist, übereinander angeordnet sind.

13. Ventilanordnung (1) nach einem oder mehreren der vorhergehenden Ansprüche, **dadurch gekennzeichnet, dass** der Verschluss (5) mittels mindestens eines Übertragungselements, das vorzugsweise durch einen Schaft (10) definiert ist, der den Verschluss (5) diametral kreuzt, mit einem Aktuator betriebswirksam verbunden ist, der so konfiguriert ist, dass er die Bewegung des Verschlusses (5) zwischen dem mindestens einen Öffnungszustand und dem Schließzustand herbeiführt.

14. Fluidabgabevorrichtung, umfassend:

    - mindestens eine Verteilungsleitung (101), die sich zwischen einem Einlassabschnitt (102) und einem Auslassabschnitt (103) erstreckt;

    und **dadurch gekennzeichnet, dass** sie mindestens eine Ventilanordnung (1) nach einem oder mehreren der vorhergehenden Ansprüche umfasst, die angeordnet ist, um die mindestens eine Verteilungsleitung (101) abzufangen.

15. Verfahren zur Messung der Geschwindigkeit und/oder Durchflussrate (Q) eines in einer Vorrichtung strömenden Fluids, vorzugsweise in einer Verteilungsvorrichtung für das Fluid, **dadurch gekennzeichnet, dass** eine Ventilanordnung (1) nach einem oder mehreren der Ansprüche 1 bis 13 verwendet wird.

## Revendications

1. Ensemble vanne (1) pour un fluide, comprenant un corps de vanne (2) dans lequel une ouverture fixe (20) est définie et comprenant un obturateur (5) qui est actionné de manière à être mobile par rapport à ladite ouverture fixe (20) entre au moins une condition ouverte, dans lequel il définit au moins un passage (2') pour l'écoulement dudit fluide à travers l'ensemble vanne (1), et un état fermé dans lequel il bloque l'écoulement du fluide à travers l'ensemble vanne (1), dans lequel ledit ensemble vanne comprend en outre :

   - au moins une première prise de pression (9') définie et/ou montée sur ledit obturateur (5),
   - au moins une seconde prise de pression (9") définie et/ou montée sur ledit obturateur (5) et configurée de manière à définir une prise de pression statique,
   - des moyens de mesure (17) reliés de manière opérationnelle à ladite première prise de pression (9') et à ladite seconde prise de pression (9") et configurés pour détecter et/ou déterminer au moins une quantité à utiliser pour le calcul de la vitesse et/ou du débit (Q) du fluide à travers l'ensemble vanne (1), l'ensemble vanne étant **caractérisé en ce que** l'au moins une première prise de pression est définie et/ou montée sur ledit obturateur de sorte que, lorsque ledit obturateur est dans ladite au moins une condition ouverte, il définit une prise de pression totale.

2. Ensemble vanne selon la revendication 1, **caractérisé en ce que** lesdits moyens de mesure (17) sont configurés pour détecter et/ou déterminer au moins l'une des quantités suivantes :

   - la pression totale ($P_T$) dudit fluide et la pression statique ($_{PS}$) dudit fluide, et/ou
   - la différence de pression (dP) entre ladite pression totale et ladite pression statique, et/ou
   - un débit (q) dudit fluide dérivant de ladite différence de pression entre ladite pression totale et ladite pression statique.

3. Ensemble vanne (1) selon une ou plusieurs des revendications précédentes, **caractérisé en ce que** la première prise de pression (9') et la seconde prise de pression (9') sont configurées pour que l'axe V1 qui fait saillie orthogonalement de la première prise de pression (9') ait une direction différente ou une direction coïncidente/parallèle à une direction différente par rapport à l'axe V2 qui fait saillie orthogonalement de la seconde prise de pression (9").

4. Ensemble vanne (1) selon une ou plusieurs des revendications précédentes, **caractérisé en ce que** ladite première prise de pression (9') est montée et/ou définie sur ledit obturateur (5) de sorte que, dans un une condition d'ouverture dudit obturateur, l'axe V1 qui fait saillie orthogonalement de ladite première prise de pression (9') est sensiblement parallèle, mais de direction opposée, par rapport à l'axe X qui traverse orthogonalement l'ouverture fixe (20) avec une direction correspondant à l'avancement de fluide à travers l'ensemble vanne (1).

5. Ensemble vanne (1) selon une ou plusieurs des revendications précédentes, **caractérisé en ce que** la seconde prise de pression (9") est définie et/ou montée sur ledit obturateur (5) de sorte que, lorsque ledit obturateur (5) se trouve dans ladite au moins une configuration d'ouverture, l'axe V2 qui fait saillie orthogonalement à partir de la seconde prise de pression (9") définit un angle d'environ 90° à 180°.

6. Ensemble vanne (1) selon une ou plusieurs des revendications précédentes, **caractérisé en ce que** lesdits moyens de mesure (17) sont connectés électroniquement à une unité de traitement (7) qui est configurée pour déterminer la vitesse et/ou le débit (Q) dudit fluide qui traverse l'ensemble vanne (1) sur la base des pressions détectées et/ou déterminées par lesdits moyens de mesure (17).

7. Ensemble vanne (1) selon une ou plusieurs des revendications précédentes, **caractérisé en ce que** lesdits moyens de mesure (17) comprennent :

   - un premier transducteur de pression qui est relié de manière opérationnelle à la première prise de pression (9') afin de fournir un signal représentatif de la pression totale du fluide, et
   - un second transducteur de pression relié de manière opérationnelle à la seconde prise de pression (9') afin de fournir un signal représentatif de la pression statique du fluide, et/ou
   - un transducteur de pression différentielle qui est relié de manière opérationnelle à la première (9') et à la seconde prise de pression (9') pour fournir un signal représentatif de la pression dynamique, et donc de la différence de pression du fluide entre la première et la seconde prise de pression, et/ou
   - un débitmètre qui est monté de manière opérationnelle sur un circuit de dérivation qui reçoit le débit prélevé sur ladite première prise de pression (9') et réintroduit dans ladite seconde prise de pression (9"), afin de fournir un signal représentatif de la vitesse et/ou du débit (q) du flux dérivant de la différence de pression entre la première et la seconde prise de pression.

8. Ensemble vanne (1) selon une ou plusieurs des revendications précédentes, **caractérisé en ce qu'**il comprend des moyens de connexion fluidique (16) entre ladite première prise de pression (9'), ladite seconde prise de pression (9") et lesdits moyens de mesure (17), lesdits moyens de connexion fluidique (16) comprenant au moins un circuit fluidique formé à l'intérieur dudit obturateur (5) et/ou à l'intérieur du corps de vanne (2) et/ou à l'intérieur de l'organe (10) qui transmet le mouvement audit obturateur (5).

9. Ensemble vanne (1) selon une ou plusieurs des revendications précédentes, **caractérisé en ce que** ledit obturateur (5) a la forme d'un disque ou d'une boule, de préférence avec ladite première prise de pression (9') et ladite seconde prise de pression (9") montées et/ou définies sur la même face dudit obturateur (5).

10. Ensemble vanne (1) selon une ou plusieurs des revendications précédentes, **caractérisé en ce que** ladite première prise de pression (9') et/ou ladite seconde prise de pression (9") est :

- obtenue sur un élément d'ouverture correspondant (6', 6"), de préférence défini par une section tubulaire en forme de « L », qui est monté sur ledit obturateur (5), et/ou
- définie par un trou (23) défini sur la surface dudit obturateur (5).

11. Ensemble vanne (1) selon une ou plusieurs des revendications précédentes, **caractérisé en ce qu'**aucun disque ou autre composant n'est monté à l'intérieur de l'obturateur (5) ou sur l'obturateur (5).

12. Ensemble vanne (1) selon une ou plusieurs des revendications précédentes, **caractérisé en ce que** ladite première (9') et ladite seconde prise de pression (9") sont superposées l'une à l'autre le long d'un axe Y autour duquel l'obturateur (5) est mobile.

13. Ensemble vanne (1) selon une ou plusieurs des revendications précédentes, **caractérisé en ce que** l'obturateur (5) est associé opérationnellement, par l'intermédiaire d'au moins un organe de transmission, de préférence défini par une tige (10) qui traverse diamétralement l'obturateur (5), à un actionneur configuré pour entraîner le déplacement dudit obturateur (5) entre ladite au moins une condition d'ouverture et ladite condition de fermeture.

14. Appareil de distribution de fluide comprenant :

- au moins une ligne de distribution (101) s'étendant entre une section d'entrée (102) et une section de sortie (103) ;

et **caractérisé en ce qu'**il comprend au moins un ensemble vanne (1) selon l'une ou plusieurs des revendications précédentes placé pour intercepter ladite au moins une ligne de distribution (101).

15. Procédé de mesure de la vitesse et/ou du débit (Q) d'un fluide circulant dans un appareil, de préférence dans un appareil de distribution dudit fluide, **caractérisé par** l'utilisation d'un ensemble vanne (1) selon l'une ou plusieurs des revendications 1 à 13.

100

106

105

107

105'

1

101

1

107

1

103

1

102

FIG. 1

FIG. 2A

FIG. 2B

FIG. 2C

FIG. 3A

FIG. 3B

FIG. 3C

FIG. 4

FIG. 5

FIG. 6

**EP 4 166 824 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014189395 A